# EUROPÄISCHE PATENTSCHRIFT

(11) **EP 0 454 824 B1**
(45) Veröffentlichungstag und Bekanntmachung des Hinweises auf die Patenterteilung: **09.03.1994**
(21) Anmeldenummer: 90917089.6
(22) Anmeldetag: 17.11.1990
(51) Int. Cl.: B23B 27/04

(54) **STECHDREHWERKZEUG**
CUTTING-OFF TOOL
OUTIL A TRONCONNER

(30) Priorität: 23.11.1989 DE 8913805 U
(43) Veröffentlichungstag der Anmeldung: 06.11.1991
(73) Patentinhaber: Hertel Aktiengesellschaft Werkzeuge + Hartstoffe, 90766 Fürth (DE)
(72) Erfinder: DÜRSCHINGER, Hans, D-8510 Fürth (DE)
(74) Vertreter: Tergau, Enno, Dipl.-Ing.
(86) Internationale Anmeldenummer: DE9000883
(87) Internationale Veröffentlichungsnummer: WO9108071

(56) Entgegenhaltungen:
- EP-A- 0 241 973
- EP-A- 0 245 225
- AT-B- 381 263
- FR-A- 2 145 291
- GB-A- 299 875
- SU-A- 831 388

## Beschreibung

Die Erfindung betrifft ein Stechdrehwerkzeug mit den Merkmalen des Oberbegriffs des Anspruches 1. Derartige Stechdrehwerkzeuge sind beispielsweise Drehmeißel oder Fräser. Sie dienen in ihrer erfindungsgemäßen Ausgestaltung insbesondere zum Abstechen von Werkstückenden.

Stechwerkzeuge sollen eine möglichst ebene Oberfläche an der Stirnseite des abgestochenen Teiles oder des vom Abstechteil befreiten Werkstückes gewährleisten. Der Einstellwinkel κ der Schneide dient dazu, an einer der beiden durch den Stechschnitt gebildeten Stirnflächen das Stehenbleiben von Werkstoffresten, beispielsweise in Form eines Restbutzens zu verhindern. Der Einstechwinkel κ erzeugt indessen einen auf die Stechschneide bzw. auf das Stechwerkzeug einwirkenden Abdrängdruck Fp. Dieser drängt das Werkzeug aus seiner Mittellage heraus etwa in Stechschneidenlängsrichtung. Dies kann statt zur angestrebten ebenen Stirnfläche dort zu einer eher balligen bzw. ausgemuldeten Oberflächenform führen.

Aus EP-A-0245 225 ist bereits ein Stechdrehwerkzeug der eingangs genannten Art mit einer die Spanbildung in der Stechnut im Sinne einer leichteren, sichereren Spanabfuhr begünstigenden Spanflächenform bekannt, bei welchem die in Richtung auf die vorauseilende Stechschneidenecke wirksamen Abdrängdrücke dadurch kompensiert werden, daß die Stechschneide und die anschließende Spanfläche oder mit unterschiedlichen Spanwinkeln versehene Spanflächenbereiche in Richtung auf die nacheilende Schneidecke ansteigen. Dadurch wird eine Druckkomponente Fₚ' erzeugt, die in Richtung auf die beim Einstechvorgang nacheilende Schneidecke wirksam ist.

Der Erfindung liegt die Aufgabe zugrunde, ein Stechdrehwerkzeug der eingangs genannten Art mit einer modifizierten Kompensierung des Abdrängdruckes zu schaffen. Diese Aufgabe wird durch den kennzeichnenden Teil des Anspruches 1 gelöst. Insbesondere bedient sich diese Lösung der Merkmale des Anspruches 2.

Dadurch kann die nicht durchgehend gerade Schneidkante im wesentlichen eine horizontale, etwa in der durch die Werkstückachse gelegten Horizontalebene befindliche Lage beibehalten. Der dem in Richtung auf die vorauseilende Schneidecke wirksamen Abdrängdruck entgegenwirkende Kompensationsdruck wird dadurch erzeugt, daß der ablaufende Span im wesentlichen nur die der nacheilenden Schneidecke benachbarte Gegenflankenspanfläche kontaktiert und dadurch den dem Abdrängdruck Fp entgegenwirkenden Kompensationsdruck Fp' erzeugt.

Der dem Abdrängdruck Fp entgegenwirkende Kompensationsdruck Fp' kann auch durch das Kennzeichnungsmerkmal des Anspruches 11 unterstützt werden.

Die Stechschneide des erfindungsgemäßen Werkzeuges zeichnet sich durch einen positiven Spanwinkel aus. Die Stechschneide kann in der üblichen Weise über ihre gesamte Länge gefast sein.

Der Gegenstand der Erfindung wird anhand eines in den Figuren dargestellten Beispieles näher erläutert. Es zeigen:
- Fig. 1: eine perspektivische Draufsicht auf das stechschneidenseitige Vorderende eines für ein Stechdrehwerkzeug bestimmten Schneidkörpers,
- Fig. 2: eine Frontansicht in Pfeilrichtung II auf den Schneidenbereich des Schneidkörpers gemäß Fig. 1,
- Fig. 3: eine vertikale Draufsicht auf im wesentlichen die Spanfläche des erfindungsgemäßen Werkzeuges bzw. Schneidkörpers,
- Fig. 4: eine schematisierte Frontansicht der Stechschneide etwa in Pfeilrichtung II von Fig. 1 mit schematisiert angedeuteter Schnittdarstellung des ablaufenden Stechspans und seiner Führung durch die Spanfläche der Stechschneide,
- Fig. 5: eine perspektivische Draufsicht von schräg hinten in Höhe etwa des Spanformers auf die Spanfläche und auf die Stechschneide.

Die Freifläche 2 der insgesamt mit 3 bezeichneten Stechschneide des Schneidkörpers 1 schließt zur Bildung eines in der Ebene der Spanfläche 4 der Stechschneide 3 liegenden Einstellwinkels κ einen Winkel γ ≠ 90° mit der in Stechvorschubrichtung 5 verlaufenden, vertikalen Werkzeugmittellängsebene 6 ein.

Die Stechschneide 3 weist zwischen ihren beidseitigen, an die in Stechvorschubrichtung 5 vorauseilende Schneidecke 7 und an die in Stechvorschubrichtung hintenbleibende Schneidecke 8 angrenzenden Endbereichen 9,10 einen ausgemuldeten Mittelbereich 11 mit einer zu den beiden Endbereichsschneiden 12,13 im wesentlichen parallelen Mittelbereichsschneide 14 auf.

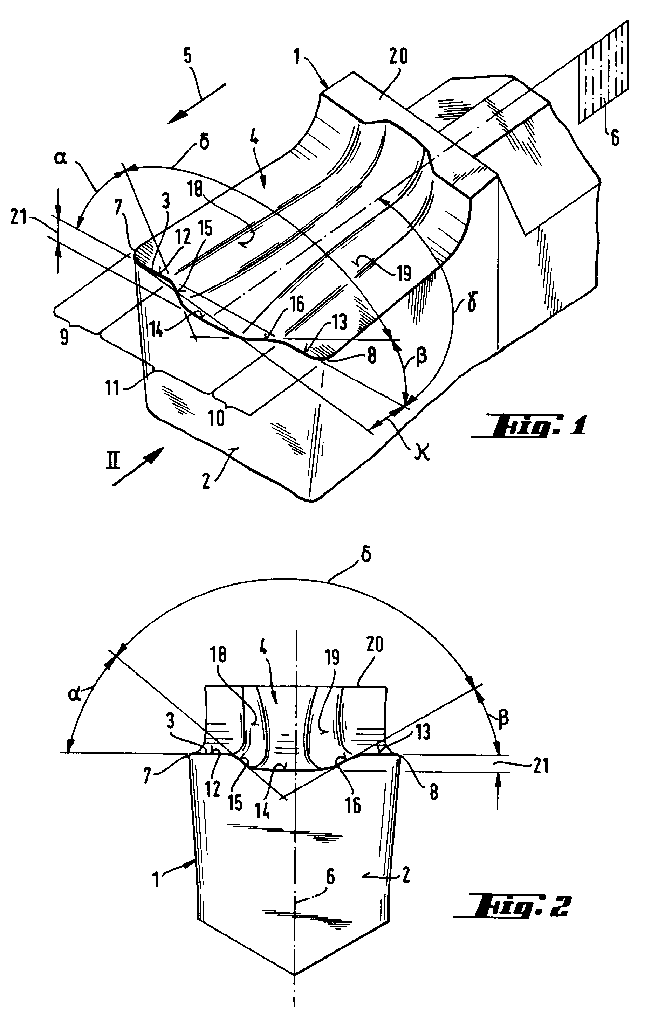

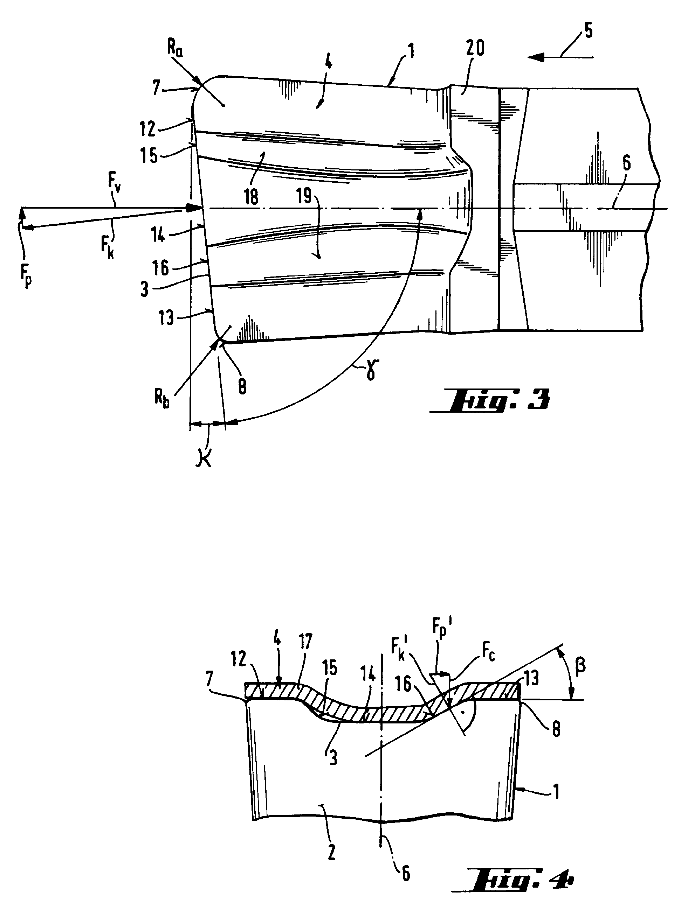

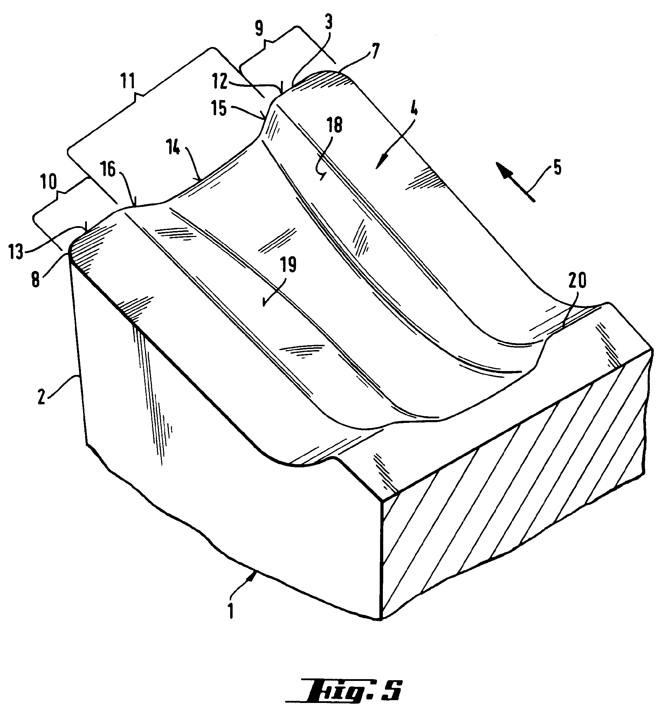

Die Verbindungsschneiden 15,16 zwischen den Endbereichsschneiden 12,13 und der Mittelbereichsschneide 14 bilden einen sich zur Mittelbereichsschneide 14 hin schließenden Flankenwinkel δ. Dabei bildet die der vorauseilenden Schneidecke 7 zugewandte Verbindungsschneide 15 mit der angrenzenden Endbereichsschneide 12 einen Neigungswinkel α, der größer ist als der Gegenneigungswinkel β zwischen der anderen Verbindungsschneide 16 und der in Stechrichtung 5 hintenbleibenden Endbereichsschneide 13. Der Neigungswinkel α ist so bemessen, daß der ablaufende Span 17 (Fig. 4) ohne wesentlichen Kontakt mit der im Neigungswinkel α geneigten Flankenspanfläche 18 bleibt, während der Gegenneigungswinkel β (Fig. 2) so bemessen ist, daß der ablaufende Span 17 Kontakt behält mit der Gegenflankenspanfläche 19.

Der durch die beiden Verbindungsschneiden 15,16 gebildete Flankenwinkel δ ist ein stumpfer Winkel. Die Differenz zwischen dem Neigungswinkel α und dem Gegenneigungswinkel β beträgt etwa 7° - 13°, insbesondere ca. 10°. Der Neigungswinkel α beträgt etwa 40° und der Gegenneigungswinkel β etwa 30°. Die beiden Endbereichsschneiden 12,13 betragen etwa jeweils 15% - 30%, insbesondere 18% - 21% der Stechbreite.

Die Querschnittsform der gesamten Spanfläche 4 stimmt im wesentlichen überein mit der Form der Stechschneide 3. Dies bedeutet praktisch, daß sich die Form der Stechschneide 3 in Spanablaufrichtung, also entgegen der Stechvorschubrichtung 5, über die gesamte Spanfläche 4 fortsetzt. Die Spanfläche 4 geht in Spanablaufrichtung über in eine Spanformstufe 20. Der Übergang von der Spanfläche 4 in die Spanformstufe 20 verläuft etwa kreisbogensegmentartig nach oben. Die beiden Endbereichsschneiden 12,13 und die Mittelbereichsschneide 14 bilden mehr als 50%, insbesondere mehr als 70% der Stechbreite.

Der Eckenradius Rₐ der in Stechvorschubrichtung 5 vorauseilenden Schneidecke 7 ist größer als der Gegeneckenradius R_{b} an der nacheilenden Schneidecke 8 (Fig. 3).

Der Spanwinkel zwischen Spanfläche 4 und Freifläche 2 ist ein spitzer Winkel. Die Stechschneide 3 bzw. deren einzelne Komponenten (Endbereichsschneiden 12,13; Mittelbereichsschneide 14 und Verbindungsschneiden 15,16) sind abgerundet und die Übergänge zwischen ihnen ausgerundet. Das Tiefenmaß 21 der Mittelbereichsschneide 14 gegenüber den Endbereichsschneiden 12,13 beträgt zwischen ca. 6% und 9% der Stechbreite, wobei 9% der kleinsten und 6% den größten Stechbreiten zugeordnet sind. Die Stechbreiten bewegen sich in der Regel zwischen ca. 2 und ca. 6 mm. Der Einstellwinkel κ kann zwischen 1° und 15° betragen. Im Ausführungsbeispiel, auf welchem die übrigen Bemessungen beruhen, ist ein Einstellwinkel von ca. 6° gewählt.

### Bezugszeichenliste

- 1: Schneidkörper
- 2: Freifläche
- 3: Stechschneide
- 4: Spanfläche
- 5: Stechvorschubrichtung
- 6: Werkzeugmittellängsebene
- 7: Schneidecke vorauseilend
- 8: Schneidecke hintenbleibend
- 9: Endbereich
- 10: Endbereich
- 11: Mittelbereich
- 12: Endbereichsschneide
- 13: Endbereichsschneide
- 14: Mittelbereichsschneide
- 15: Verbindungsschneide
- 16: Verbindungsschneide
- 17: Span
- 18: Flankenspanfläche
- 19: Gegenflankenspanfläche
- 20: Tiefenmaß

## Patentansprüche

1. Stechdrehwerkzeug, insbesondere Schneidkörper (1) aus einem harten Schneidwerkstoff zur lösbaren Fixierung an einem Halter, bei dem die Freifläche (2) der Stechschneide (3) zur Bildung eines in der Ebene der Spanfläche (4) der Stechschneide (1) liegenden Einstellwinkels (κ) einen Winkel (γ) ≠ 90° mit der in Stechvorschubrichtung (5) verlaufenden vertikalen Werkzeugmittellängsebene (6) einschließt und die Stechschneide (3) sowie die angrenzende Spanfläche (4) zwischen ihren beidseitigen Endbereichen (9,10) einen ausgemuldeten Mittelbereich (11) aufweisen,
dadurch gekennzeichnet,
- daß **der** Mittelbereich (11) eine zu den beiden Endbereichsschneiden (12,13) im wesentlichen parallele Mittelbereichsschneide (14) aufweist und
- daß die Verbindungsschneiden (15,16) zwischen den Endbereichsschneiden (12,13) und der Mittelbereichsschneide (14) sowie die Flankenspanflächen (18,19) der Verbindungsschneiden (15,16) einen sich zum Schneidkörper (1) hin schließenden Flankenwinkel (δ) bilden,
-- wobei die der in Stechvorschubrichtung (5) vorauseilenden Endbereichsschneide (12) zugewandte Verbindungsschneide (15) einen Neigungswinkel (α) mit der Endbereichsschneide (12) bildet, der größer ist als der Gegenneigungswinkel (β) zwischen der anderen Verbindungsschneide (16) und der in Stechvorschubrichtung (5) nacheilenden Endbereichsschneide (13).

2. Stechdrehwerkzeug nach Anspruch 1,
gekennzeichnet durch
eine Größe des Neigungswinkels (α), daß der ablaufende Span (17) ohne wesentlichen Kontakt mit der im Neigungswinkel (α) geneigten Flankenspanfläche (18) bleibt, während der Gegenneigungswinkel (β) so bemessen ist, daß der ablaufende Span (17) Kontakt behält mit der Gegenflankenspanfläche (19).

3. Stechdrehwerkzeug nach Anspruch 1 oder 2,
dadurch gekennzeichnet,
daß der Flankenwinkel (δ) ein stumpfer Winkel ist.

4. Stechdrehwerkzeug nach einem der Ansprüche 1 bis 3,
dadurch gekennzeichnet,
daß die Differenz zwischen dem Neigungswinkel (α) und dem Gegenneigungswinkel (β) etwa 7° - 13 °, insbesondere ca. 10° beträgt.

5. Stechdrehwerkzeug nach Anspruch 4,
dadurch gekennzeichnet,
daß der Neigungswinkel (α) etwa 40° und der Gegenneigungswinkel (β) etwa 30° betragen.

6. Stechdrehwerkzeug nach einem oder mehreren der vorhergehenden Ansprüche,
gekennzeichnet durch
eine etwa gleiche Länge der beiden Endbereichsschneiden (12,13) von jeweils etwa 15% - 30%, insbesondere von etwa 18% - 21% der Stechbreite.

7. Stechdrehwerkzeug nach einem oder mehreren der vorhergehenden Ansprüche,
dadurch gekennzeichnet,
daß die Querschnittsform der gesamten Spanfläche (4) im wesentlichen übereinstimmt mit der Form der Stechschneide (3).

8. Stechdrehwerkzeug nach einem oder mehreren der vorhergehenden Ansprüche,
dadurch gekennzeichnet,
daß die Spanfläche (4) in Spanablaufrichtung übergeht in eine Spanformstufe (20).

9. Stechdrehwerkzeug nach Anspruch 8,
gekennzeichnet durch
einen kreisbogensegmentartigen Übergang der Spanfläche (4) in die Spanformstufe (20).

10. Stechdrehwerkzeug nach einem oder mehreren der vorhergehenden Ansprüche,
dadurch gekennzeichnet,
daß die Endbereichsschneiden (12,13) und die Mittelbereichsschneide (14) mehr als 50%, insbesondere mehr als 70% der Stechbreite bilden.

11. Stechdrehwerkzeug nach einem oder mehreren der vorhergehenden Ansprüche,
dadurch gekennzeichnet,
daß der Eckenradius Rₐ der in Stechvorschubrichtung vorauseilenden Schneidecke (7) größer ist als der Gegeneckenradius R_{b} der nacheilenden Schneidecke (8).

12. Stechdrehwerkzeug nach einem oder mehreren der vorhergehenden Ansprüche,
gekennzeichnet durch
einen positiven Spanwinkel der Stechschneide (3).

13. Stechdrehwerkzeug nach einem oder mehreren der vorhergehenden Ansprüche,
gekennzeichnet durch
eine Abrundung der Stechschneide über deren gesamte Länge und eine Ausrundung der Übergänge zwischen deren Bereichen (12-16).

14. Stechdrehwerkzeug nach einem oder mehreren der vorhergehenden Ansprüche,
gekennzeichnet durch
ein Tiefenmaß (20) der Mittelbereichsschneide (14) gegenüber den Endbereichsschneiden (12,13) von ca. 6% - 9% der Stechbreite, wobei 9% der kleinsten und 6% den größten Stechbreiten zugeordnet sind.

15. Stechdrehwerkzeug nach einem oder mehreren der vorhergehenden Ansprüche,
dadurch gekennzeichnet,
daß der Einstellwinkel (κ) ca. 6° beträgt.

## Claims

1. Cutting tool, in particular cutting body (1) of a hard cutting material for fixing releasably on a holder, in which the flank (2) of the cutting edge (3) encloses an angle (γ) ≠ 90° with the vertical longitudinal centre-plane (6) of the tool running in the cutting feed direction (5) to form a cutting edge angle (κ) lying in the plane of the face (4) of the cutting edge (3), and the cutting edge (3) and the adjacent face (4) have a hollowed-out central region (11) between their end regions (9,10) on both sides; characterized in that the central region (11) has a central-region cutting edge (14) which is substantially parallel to the two end-region cutting edges (12,13); and in that the connecting cutting edges (15,16) between the end-region cutting edges (12,13) and the central-region cutting edge (14) and the flank faces (18,19) of the connecting cutting edges (15,16) form a flank angle (δ) which closes towards the cutting body (1), the connecting cutting edge (15) facing the leading end-region cutting edge (12) in the cutting feed direction (5) forming a tool cutting edge inclination (α) with the end-region cutting edge (12), which inclination is greater than the tool cutting edge counter-inclination (β) between the other connecting cutting edge (16) and the trailing end-region cutting edge (13) in the cutting feed direction (5).

2. Cutting tool according to Claim 1, characterized by a size of the tool cutting edge inclination (α) such that the chip (17) running off has no substantial contact with the flank face (18) inclined at the tool cutting edge inclination (α), whereas the tool cutting edge counter-inclination (β) is dimensioned such that the chip (17) running off maintains contact with the counter-flank face (19).

3. Cutting tool according to Claim 1 or 2, characterized in that the flank angle (δ) is an obtuse angle.

4. Cutting tool according to one of Claims 1 to 3, characterized in that the difference between the tool cutting edge inclination (α) and the tool cutting edge counter-inclination (β) is approximately 7° - 13°, in particular about 10°.

5. Cutting tool according to Claim 4, characterized in that the tool cutting edge inclination (α) is approximately 40° and the tool cutting edge counter-inclination (β) is approximately 30°.

6. Cutting tool according to one or more of the preceding claims, characterized by an approximately identical length of the two end-region cutting edges (12,13) of in each case approximately 15 % - 30 %, in particular of approximately 18 % - 21 %, of the cutting width.

7. Cutting tool according to one or more of the preceding claims, characterized in that the cross-sectional shape of the overall face (4) corresponds substantially to the shape of the cutting edge (3).

8. Cutting tool according to one or more of the preceding claims, characterized in that, in the running-off direction of the chip, the face (4) merges into a chip-shaping step (20).

9. Cutting tool according to Claim 8, characterized by a circular arc segment-like transition of the face (4) into the chip-shaping step (20).

10. Cutting tool according to one or more of the preceding claims, characterized in that the end-region cutting edges (12,13) and the central-region cutting edge (14) form more than 50 %, in particular more than 70 %, of the cutting width.

11. Cutting tool according to one or more of the preceding claims, characterized in that the corner radius Rₐ of the leading cutting edge corner (7) in the cutting feed direction is greater than the counter-corner radius R_{b} of the trailing cutting edge corner (8).

12. Cutting tool according to one or more of the preceding claims, characterized by a positive tool orthogonal rake of the cutting edge (3).

13. Cutting tool according to one or more of the preceding claims, characterized by a rounding of the cutting edge over its entire length and a rounding of the transitions between its regions (12-16).

14. Cutting tool according to one or more of the. preceding claims, characterized by a depth dimension (20) of the central-region cutting edge (14) relative to the end-region cutting edges (12,13) of about 6 % - 9 % of the cutting width, 9 % being assigned to the smallest and 6 % to the greatest cutting widths.

15. Cutting tool according to one or more of the preceding claims, characterized in that the cutting edge angle (κ) is about 6°.

## Revendications

1. Outil de tronçonnage, en particulier corps de coupe (1) en matière de coupe dure, destinée à être fixé de façon détachable sur un porte-outil, dans lequel la surface libre (2) de l'arête de tronçonnage (3) forme un angle γ ≠ 90° avec le plan longitudinal central vertical de l'outil qui s'étend dans la direction de tronçonnage (5) afin de former un angle de couple (κ) situé dans le plan de la face de coupe (4) de l'arête de tronçonnage (1), et l'arête de coupe (3) ainsi que la face de coupe adjacente (4) présentent une région centrale évidée (11) entre leurs régions terminales (9, 10) situées de part et d'autre, caractérisé en ce que
- la région centrale (11) comporte une arête centrale (14) sensiblement parallèle aux deux arêtes terminales (12, 13), et
- les arêtes de liaison (15, 16) entre les arêtes terminales (12, 13) et l'arête centrale (14), ainsi que les faces de coupe en flanc (18, 19) des arêtes de liaison (15, 16), forment un angle de flanc (δ) qui se ferme en direction du corps de coupe (1),
- et en ce que l'arête de liaison (15) dirigée vers l'arête terminale (12) menante dans la direction de tronçonnage (5) forme un angle d'inclinaison (α) avec l'arête terminale (12), qui est supérieure à l'angle d'inclinaison opposé (β) entre l'autre arête de liaison (16) et l'arête terminale (13) traînée dans la direction de tronçonnage (5).

2. Outil de tronçonnage selon la revendication 1, caractérisé en ce que l'angle d'inclinaison (α) a une valeur telle que le copeau qui se détache (17) reste sensiblement sans contact avec la face de coupe en flanc (18) inclinée sous l'angle d'inclinaison (α), tandis que l'angle d'inclinaison opposé (β) est choisi de telle manière que le copeau qui se détache (17) reste en contact avec la face de coupe en flanc opposée (19).

3. Outil de tronçonnage selon l'une ou l'autre des revendications 1 et 2, caractérisé en ce que l'angle de flanc (δ) est un angle obtus.

4. Outil de tronçonnage selon l'une quelconque des revendications 1 à 3, caractérisé en ce que la différence entre l'angle d'inclinaison (α) et l'angle d'inclinaison opposé (β) s'élève à environ 7 à 13°, en particulier environ 10°.

5. Outil de tronçonnage selon la revendication 4, caractérisé en ce que l'angle d'inclinaison (α) s'élève à environ 40° et l'angle d'inclinaison opposé (β ) s'élève à environ 30°.

6. Outil de tronçonnage selon l'une ou plusieurs des revendications précédentes, caractérisé en ce que les deux arêtes terminales (12, 13) ont une longueur à peu près égale qui représente respectivement environ 15% à 30%, en particulier environ 18% à 21% de la largeur de tronçonnage.

7. Outil de tronçonnage selon l'une ou plusieurs des revendications précédentes, caractérisé en ce que la forme en section transversale de la totalité de la face de coupe (4) coïncide sensiblement avec la forme de l'arête de tronçonnage (3).

8. Outil de tronçonnage selon l'une ou plusieurs des revendications précédentes, caractérisé en ce que la face de coupe (4) se transforme dans la direction de progression du copeau dans un gradin (20) de formage du copeau.

9. Outil de tronçonnage selon la revendication 8, caractérisé en ce que la transition de la face de coupe (4) vers le gradin (20) a la forme d'un segment d'arc circulaire.

10. Outil de tronçonnage selon l'une ou plusieurs des revendications précédentes, caractérisé en ce que les arêtes terminales (12, 13) et l'arête centrale (14) forment plus de 50%, en particulier plus de 70% de la largeur de tronçonnage.

11. Outil de tronçonnage selon l'une ou plusieurs des revendications précédentes, caractérisé en ce que le rayon Rₐ dans le coin de l'arête de coupe (7) menante dans la direction de tronçonnage est supérieur au rayon R_{b} du coin opposé de l'arête de coupe traînée (8).

12. Outil de tronçonnage selon l'une ou plusieurs des revendications précédentes, caractérisé en ce que l'angle de coupe de l'arête de tronçonnage (3) est positif.

13. Outil de tronçonnage selon l'une ou plusieurs des revendications précédentes, caractérisé en ce que l'arête de tronçonnage est arrondie sur la totalité de sa longueur, et que les transitions entre ses régions (12-16) sont arrondies.

14. Outil de tronçonnage selon l'une ou plusieurs des revendications précédentes, caractérisé en ce que l'arête centrale (14) est située par rapport aux arêtes terminales (12, 13) à une profondeur (20) qui représente environ 6% à 9% de la largeur de tronçonnage, 9% étant associé à la plus faible largeur de tronçonnage et 6% à la plus forte.

15. Outil de tronçonnage selon l'une ou plusieurs des revendications précédentes, caractérisé en ce que l'angle de coupe κ est égal à environ 6°.
